# EUROPEAN PATENT APPLICATION

(11) **EP 1 657 617 A2**
(43) Date of publication of application: **17.05.2006**
(21) Application number: 05256950.6
(22) Date of filing: 10.11.2005
(51) Int. Cl.: G06F 1/00

(54) **A method and apparatus for detecting and protecting a credential card**

(30) Priority: 10.11.2004 US 986482
(71) Applicant: Intel Corporation, Santa Clara, CA 95052-8119 (US)
(72) Inventor: Bajikar, Sundeep, Santa Clara, CA 95054 (US); McKeen, Francis, Portland, OR 97229 (US); Silvester, Kelan, Portland, OR 97229 (US)
(74) Representative: Beresford, Keith Denis Lewis

(57) **Abstract**

An approach for determining a type of credential card in a reader and, for some aspects, implementing a protection approach based on the determined type of credential card. For one aspect, an indication that a credential card has been received at a credential reader is received. In response, an instruction to be received by the credential card is provided, the instruction being recognizable by a first type of credential card, but not by a second type of credential card. The card is determined to be the first type of credential card if the response indicates that the instruction was recognized by the credential card. A protection policy may then be implemented for some aspects depending on the type of card detected.

## Description

### BACKGROUND

An embodiment of the present invention relates to the field of electronic systems and, more particularly, to an approach for detecting a type of card or module in a credential reader and/or to protecting at least a first type of card from unauthorized software accesses.

A Smart Card is a credit card sized plastic card that can provide robust storage of secrets and authentication information used with a personal computer. Each Smart Card can provide a microprocessor and some amount of non-volatile storage. The use of Smart Cards to provide credentials for user authentication as well as financial transactions has increased worldwide over the past several years.

Subscriber Identity Module (SIM) cards have been used to securely store authentication information used to allow a user access to a wireless network. The majority of GSM (Global System for Mobile communications) phones used worldwide have such a SIM card in a small reader, usually underneath the battery of the phone. A SIM card may be considered to be a small form factor Smart Card with similar characteristics defined by the ISO 7816 and 7810 specifications, but with additional functionality defined in embedded firmware in the device.

### BRIEF DESCRIPTION OF THE DRAWINGS

Embodiments of the present invention are illustrated by way of example and not limitation in the figures of the accompanying drawings in which like references indicate similar elements, and in which:

**Figure 1** is a flow diagram showing a method of one embodiment for determining a type of credential card in a credential reader.

**Figure 2** is a block diagram showing a computing system of one embodiment including a credential reader.

**Figure 3** is a flow diagram illustrating a method of one embodiment for determining a type of credential card in a credential reader.

**Figure 4** is a high-level diagram illustrating software modules and software/hardware interaction of various modules of a system such as the system of **Figure 2** in more detail.

### DETAILED DESCRIPTION

A method and apparatus for detecting a type of credential card coupled to a credential reader and an approach for protecting the card from unauthorized accesses is described. In the following description, particular components, software and hardware modules, systems, protocols, form factors, etc. are described for purposes of illustration. It will be appreciated, however, that other embodiments are applicable to other types of components, software and/or hardware modules, systems protocols, and/or form factors, for example.

References to "one embodiment," "an embodiment," "example embodiment," "various embodiments," etc., indicate that the embodiment(s) of the invention so described may include a particular feature, structure, or characteristic, but not every embodiment necessarily includes the particular feature, structure, or characteristic. Further, repeated use of the phrase "in one embodiment" does not necessarily refer to the same embodiment, although it may.

Aspects of embodiments of the invention may be described for purposes of illustration as being implemented in one of hardware, firmware or software. It will be appreciated that such aspects may instead be implemented in a different medium. For example, logic implemented on the credential card reader and/or in as part of another component may alternatively be implemented as instructions stored on a machine-accessible medium.

As discussed above, Subscriber Identity Module (SIM) cards have been used to securely store authentication information used to allow a user to access a wireless network using mobile telephones, for example. Wireless carriers for cellular, Wireless Wide Area Networks (WWANs), and Wireless Local Area Networks (WLANs) appear to intend to continue to use the large proliferation of SIM-based infrastructure for authentication to the respective wireless network. This means that in order for a notebook computer or other type of computing device, for example, to connect to any of these types of wireless networks, the computing device may need to include a reader to support such a SIM card.

Because current SIM cards adhere to the same industry specifications as a full size Smart Card, a full size Smart Card reader may be used to interact with a SIM card simply by using some type of adapter to allow the smaller SIM card to mechanically fit into the full size Smart Card reader. In some circumstances, a SIM card may be provided from the manufacturer in a full size Smart Card package. The user then snaps out the SIM card to be used in a smaller reader such as may be provided in a mobile phone, for example.

Where a credential reader may be used to read different types of credential cards or modules (e.g. Smart Cards, SIM cards, etc), an approach may be needed to determine the type of card in the reader such that subsequent interaction with or accesses directed to the card can be managed appropriately.

For example, depending on the type of card inserted into the reader, different types and/or levels of protection may be implemented to protect the card from attacks, such as software attacks. If the card is a SIM card, it may be important that a trusted channel is established for SIM card accesses by a trusted application, while, for a Smart Card, such a trusted channel may not be necessary.

A SIM card holds authentication credentials and algorithms that need to be protected by the platform hosting the device. While in a mobile telephone there is limited access by any entity that might be viewed as malicious or threatening, in a personal computer (PC), the conventional open operating environment provided by the PC may attract those types of malicious attackers who may attempt to steal secrets carried on the SIM card. Furthermore, wireless operators typically require protection mechanisms whenever a SIM card is used to present authentication credentials for a wireless device connected to a PC. A Smart Card, however, may not require such protection mechanisms.

Determining the type of credential module in a credential reader may also enable other kinds of card-type-specific features, routines, etc. to be implemented according to various embodiments.

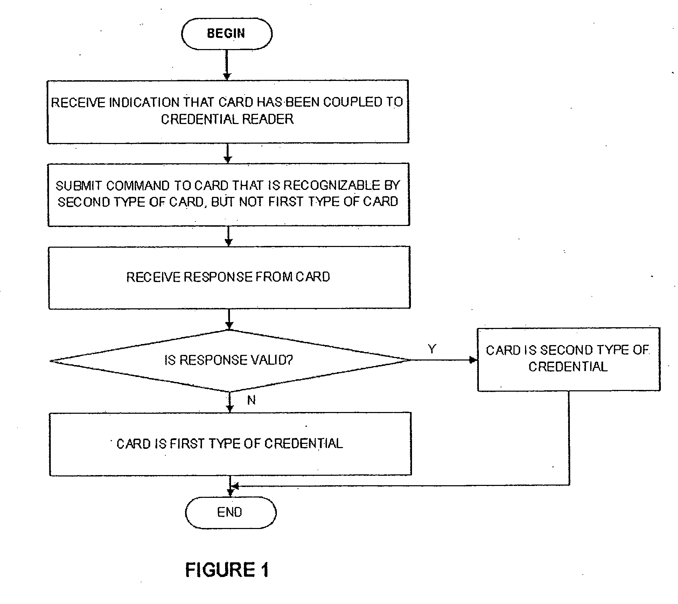

An approach of one embodiment for determining a type of credential card or module in a credential reader is described in reference to Figure 1. In response to receiving an indication that a card has been coupled to a credential reader at block 105, to determine whether the card is a first type of credential module, such as a Smart Card, or a second type of credential or identity module, such as, for example, a SIM card, a command that is recognizable by the second type of credential module, but not by the first type of credential module, is submitted to the card at block 110. If the response received from the card at block 115 is responsive to the command (decision block 120), i.e. it is not an erroneous or invalid response, for example, the card is determined to be the second type of credential module at block 125. If a response received from the card indicates an error in comparison to an expected response, the card is determined to be the first type of card at block 130.

While a SIM card is described herein for purposes of example, it will be appreciated that other types of credentials or identity modules are within the scope of various embodiments and may include, for example, a Removable User Identity Module (R-UIM) card, and a Universal Serial Bus (USB) Integrated Chip Card (UICC). Still other types of credential stores or means for storing credentials are within the scope of various embodiments.

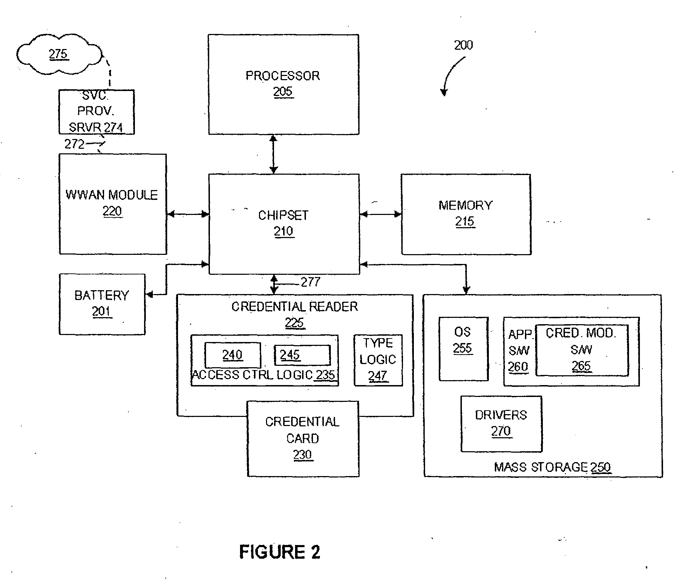

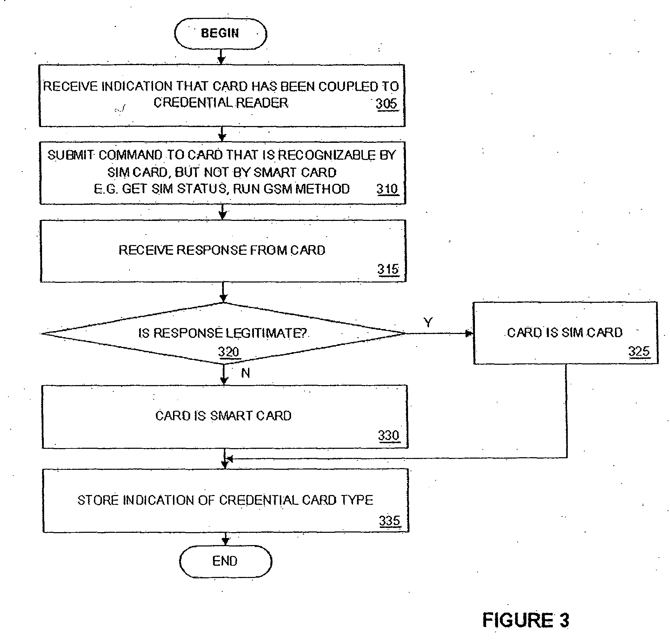

Figure 2 is a block diagram showing an exemplary computing system 200 of one embodiment that may advantageously implement the detection method of Figure 1, or a different detection method, such as the detection method of Figure 3 described below, to determine a type of card in a credential reader. The computing system 200 may, for example, be a mobile computing system such as a handheld, laptop or notebook personal computer (PC), a personal digital assistant (PDA) or other type of computing system. Alternatively, the computing system may be another type of electronic system, such as a desktop or enterprise system, or other means for computing.

Where the computing system 200 is a mobile computing system, or another type of system that may operate without an alternating current power supply, a battery and/or battery connector 201 may be included and coupled to the system 200 in a conventional manner to provide an alternate or primary power source for the computing system 200.

The exemplary computing system 200 includes a processor (or CPU) 205, a chipset 210 coupled to the processor 205, one or more memories 215 coupled to the chipset 210, which may comprise, for example, random access memory (RAM) or another type of memory, a wireless wide area network (WWAN) or other network connectivity module 220 coupled to the chipset 210 and a credential reader 225 coupled to the chipset 225.

The processor 205 of one embodiment may be an Intel® architecture microprocessor that implements a technology, such as Intel Corporation's Lagrande technology (also referred to herein as LT), that provides for protected execution along with other security-oriented features. Some details of Lagrande technology may currently be found, for example, at http://www.extremetech.com/article2/0,3973,1274197,00.asp and in other publicly available documentation.

For embodiments for which the processor 205 implements LT or another technology that provides for protected execution, the memory 215, one or more on or off-chip cache memories associated with the processor 205 (which may or may not be part of the memory 215) and the chipset 210, for example, may provide protected partitions, trusted paths or additional features that support establishment of a protected partition in the computing system 200 execution environment.

For other embodiments, the CPU 205 may be another type of processor such as, for example, an embedded processor, a digital signal processor, a graphics processor, a microprocessor from a different source, having a different architecture and/or a different security technology, etc. and/or more than one processor and/or a processor including multiple cores may be included.

The chipset 210 may be a logic circuit to provide an interface between the processor 205, the memory 215, and other devices. For one embodiment, the chipset may be implemented as one or more individual integrated circuits such as a north bridge and a south bridge, but for other embodiments, the chipset, or one or more features of the chipset, may be implemented as a portion of a larger integrated circuit or as parts of multiple other integrated circuits.

The WWAN module 220 may provide for wireless connectivity over a wireless network 272, which may be operated/serviced by a telephone company (telco) or other service provider and/or may be used by a service provider to provide services to the computing system 200 or services that are enabled by or implemented using the computing system 200. For such an example, the WWAN module 220 may enable the computing system 200 to be coupled to a remote server 274, such as a server operated by the service provider, over the wireless network 272. The server 274 may further provide connections to one or more other networks such as the Internet.

The credential reader 225 is configured to receive a credential module or card 230. The credential reader 225 may be accessible by the WWAN or other network connectivity module 220 and/or by other modules and/or applications that are to use the credential card 230 for authentication or other purposes. The credential reader 225 is configured to receive a SIM card and/or another type of credential module 230.

For one embodiment, the credential reader 225 may be a Smart Card reader designed to receive a Smart Card, but also capable of communicating with a smaller form factor SIM or other credential module using an associated adapter. The adapter may either be on the credential module itself, or otherwise coupled to receive the credential module. For other embodiments, the credential reader may be a different type of reader capable of receiving and enabling communications with at least two different types of credential modules.

The credential reader 225 may be connected to the computing system 200 externally via a Universal Serial Bus (USB), Personal Computer Memory Card International Association (PCMCIA), or other standard or non-standard connection. Alternatively, the credential reader 225 may be integrated into the computing system 200 and electrically connected to a standard host bus such as USB, Peripheral Component Interconnect (PCI)-Express or a Low Pin Count (LPC) bus. Other types of connections between the credential reader and the computing system 200, such as a wireless connection using Bluetooth™ or another protocol, are within the scope of various embodiments.

The credential reader 225 of one embodiment may include access control logic 235 to control access to the credential card 230. Alternatively, the control logic 235 may be integrated into the chipset 210 or another logic module. For one embodiment, the access control logic 235 may include, for example, access control data stores 240 and 245 to store one or more card type bits and/or one or more trusted channel bits, respectively. Optionally, the credential reader 225 may also include card type detection logic 247 to initiate or control detection of card presence and/or the type of card coupled to the reader 225. Functions and features of the access control logic 235 and card type detection logic 247 are described in more detail below.

Further, while the access control logic 235 and card type detection logic 247 are described, for purposes of example, as being implemented, at least partially, using hardware, it will be appreciated that, for other embodiments, similar features and functionality may be implemented using software, firmware or a combination of software, firmware and/or hardware. For such embodiments, the access control logic 235 and/or card detection logic 247 may comprise a machine-accessible medium via which instructions implementing the claimed features may be accessed.

A hard disk drive (HDD) and associated storage media and/or other mass storage device 250, such as a compact disc drive and associated compact disc read-only memory (CD_ROM), may also be coupled to the chipset 210. While only one mass storage reference block 250 is shown in Figure 2, it will be appreciated that multiple mass storage devices of various types may be used to implement the mass storage device 250. Further, additional storage devices may be accessible by the computing system 200 over a network 272 or over another network (not shown) that may be accessed via a wireless local area network (WLAN) card, another type of network card, modem or other wired communications device (not shown), for example.

The computing system 200 may further run an operating system 255 that provides for open and protected partitions for software execution. For one embodiment, the operating system 255 may be provided by Microsoft Corporation of Redmond, Washington, and may incorporate Microsoft's Next-Generation Secure Computing Base (NGSCB) technology. Alternatively, the operating system 255 may be a different type of operating system such as, for example, a Linux operating system or another type of operating system available from Microsoft or another supplier, for example.

Other software, such as application software and/or application programming interfaces (APIs) 260, which may include one or more programs 265 that assist with interaction with the credential card 230 and/or credential card reader 225 or make use of the AAA (authentication, authorization and accounting) capabilities that may be provided by the credential card 230 and associated authentication routines, may also be stored on the mass storage device 250 or in another memory of the system 200. Drivers 270, such as credential reader and/or WWAN module drivers may also be stored. The operating system 255 and program(s) 260 and 270 are shown as being stored on the mass storage device 250, but all or part of the operating system 255 and/or program(s) 260 and/or 270 may be stored in another storage device on or accessible by the computing system 200.

Computing systems according to various embodiments may include one or more different elements and/or may not include all of the elements shown in Figure 2.

Referring to Figures 2 and 3, a method of one embodiment for detecting a type of credential module received at a credential reader is described. While reference is made to aspects of the computing system 200 of Figure 2 for purposes of illustration, it will be appreciated that the described method of does not necessarily require the particular hardware or software elements referenced in Figure 2.

At block 305, it is determined that a credential card has been inserted into a credential reader. Referring to Figure 2, for one embodiment, for example, in response to receiving a credential card 230, the credential reader 225 may generate an interrupt to notify software, such as the credential module software 265, of the new card. Alternatively, for some embodiments, the reader 225 and/or controlling software, e.g. the software 265, may periodically poll for the presence of a credential card 230 in the reader 225 - if it receives an error, it knows the card is not present. For embodiments for which power conservation is a concern, polling associated with this approach may be performed at an interval, e.g. once per second, that takes power savings into account.

At block 310, to determine the type of card 230 in the reader 225, a command that is recognizable by a first type of card, but not by a second type of card is submitted to the card 230. For one embodiment, where, for example, the card 230 may be one of a SIM module or a Smart Card, software such as the credential module software 265 and/or hardware such as type determination logic 247 on the reader 225 itself or elsewhere in the computing system 200, in response to being notified of the presence of a credential module, may submit to the card 230 at least one of a "Run GSM Method" command accompanied by a random number, and/or a "GET SIM STATUS" command.

At block 315, a response is received from the card 230 and evaluated at block 320 to determine whether the response is legitimate.

For example, in response to receiving the "Run GSM Method" command, a SIM card executes the command and returns a reasonable 64-bit number, while a Smart Card simply returns an error code. The "Run GSM Method" function is typically used during the procedure for authenticating a SIM to a GSM (Global System for Mobile communications) network and to calculate a cipher key. More particularly, the SIM card runs the specified A3 (authentication) and A8 (key generation) algorithms (available on the SIM) using a 16 byte random number (RAND) and the subscriber authentication key Ki, which is stored in the SIM. The function then returns the calculated response SRES and the cipher key Kc. The contents of Kc may then be presented to the algorithm A5 by the Mobile Equipment (ME) or other entity requesting authentication. Details of the A3, A8 and A5 algorithms, and definitions of the authentication key Ki, cipher key Kc, SRES and other features and functionality of some currently available SIM cards may be found, for example, in the European Telecommunications Standards Institute (ETSI) GSM 11.11 specification, Version 6.2.0, released 1997.

Similarly, the "GET SIM STATUS" command is unrecognizable to a standard Smart Card, which returns an error in response to receiving this command, while the responsive output from a SIM card may be validated to identify a legitimate response. The "GET SIM STATUS" function returns information concerning the current directory. A current EF (Elementary File - a file containing access conditions and data and no other files; the file structure used to store data on the SIM card) is not affected by the STATUS function. The "GET SIM STATUS" function is also used to give an opportunity for a pro-active SIM to indicate that the SIM is ready to issue a SIM Application Toolkit command to the host computer, for example. The expected response to the "GET SIM STATUS" command is a file identification, total memory space available, CHV (Card Holder Verification - basically an indication of whether or not the user is required to identify himself/herself by entering a PIN or other security code) enabled/disabled indicator, CHV status and other GSM-specific data.

For other embodiments and/or for embodiments for which different types of credential cards may be received by the reader 225, the particular command(s) submitted to the reader 225 and/or associated response(s) may be different than the examples provided above.

If, at block 320, the response is determined to be legitimate, then at block 325, the card is determined to be the first type of card. For the examples above, if the card 230 provides a valid response to one of the commands, it is determined to be a SIM card. If instead the response is determined to be invalid or erroneous, then at block 330, the card is determined to be a Smart Card or another type of card other than a SIM card.

For some embodiments, at block 335, a credential card type indication is then stored and may be used by other software or logic, such as the access control logic 235, to manage or control subsequent interaction with the credential card 230. For example, referring to Figure 2, for one embodiment, in response to determining the type of credential card in a credential reader, a card type bit 240 may be set. For the examples described above, the card type bit 240 may function as a SIM presence bit, for example, and is set if the card is determined to be a SIM card. If the card is instead determined to be a Smart Card, the SIM presence bit 240 is not set.

It will be appreciated that the card type bit 240 may be used to indicate various types of credential cards other than SIM cards for other embodiments. It will further be appreciate that while the exemplary access control data stores 240 and 245 are described herein as single bit indicators on the card reader 225, multi-bit data stores either on the credential reader 225 or elsewhere in the computing system or accessible by the computing system may be used for various embodiments.

Determining the type of card in a card reader may be useful in enabling a computing or electronic system to determine access or protection policies to be applied and/or other features or applications to be implemented. For example, as mentioned above, for many typical uses of a SIM card, it may be important to ensure that the SIM card is sufficiently protected from attacks, such as software attacks, before applications or services that use the SIM card for authentication or other purposes are allowed to access the SIM card. One approach for protecting a SIM card or other credential card from such attacks is to provide a trusted channel between the credential reader 225 and a protected partition of the computing system 200.

Even for embodiments for which the computing system 200 is capable of establishing a protected partition and running both trusted and untrusted applications, at any given time, attempts may be made to access the credential module 230 by a trusted application or an untrusted application. Furthermore, such accesses may occur through a trusted channel or outside of a trusted channel. Accesses through a trusted channel may happen through the use of a suitable Application Programming Interface (API) provided for this purpose as described in more detail below. Accesses outside of a trusted channel may be virus attacks trying to steal credential card secrets, or they may be legacy applications that are not designed to use the trusted channel APIs.

To address this issue, for some embodiments, the credential reader 225 may further include a trusted channel data store 245 capable of storing one or more bits of data to indicate whether a trusted channel has been established between the reader 225 and a trusted or protected partition of the computing system 200 execution environment.

As used herein, the terms protected or trusted areas or paths may refer to areas of a device or paths between devices that have sufficient protections associated with them to prevent substantially all accesses to them by unauthorized devices and/or software. Further, the terms trusted software or code may refer to software that has been validated through some means to verify that it has not been altered in an unauthorized manner before execution.

Using the control bits 240 and 245 of one embodiment, the credential reader 225 may be capable of implementing sufficient protections to address each of the possible types of accesses to allow accesses that are legal and to block accesses that are potentially problematic.

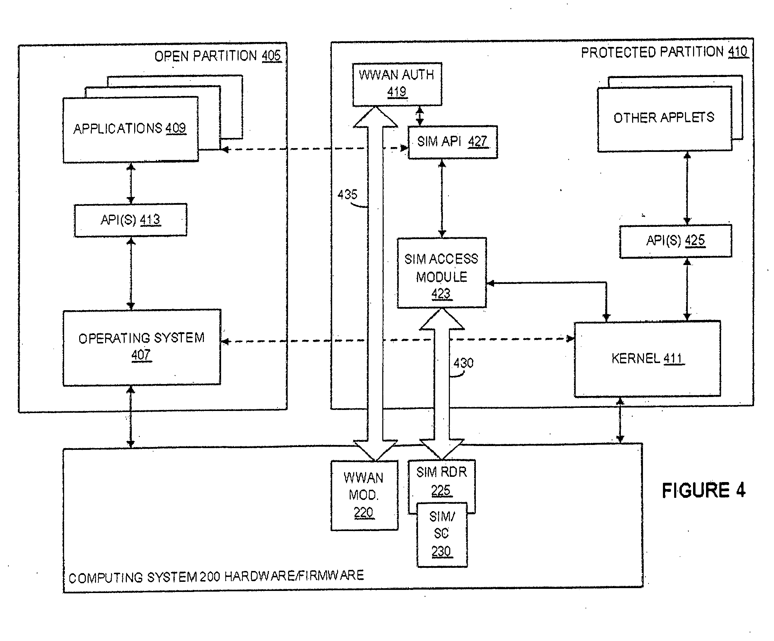

Figure 4 is a conceptual diagram illustrating at a high level some aspects of the hardware/software interface and various partitions that may be provided by computing system 200 hardware elements (e.g. the processor, memories, chipset, etc) and the operating system 255 of Figure 2 when a secure operating environment (e.g. an operating environment with a protected partition) has been established for one embodiment.

An open partition 405 provided by the operating system 255 runs the main operating system 407, drivers 270 (Figure 2), applications 409 and associated APIs 413. A protected partition 410 includes a protected operating system kernel 411 and protected applets or applications such as one or more WWAN-related applications 421 and/or other applications that may be part of the software 260 (Figure 2). Associated API(s) 425 may also be included.

For some embodiments, to provide for protected communications with a credential card, a SIM access module 423 (or other credential card access module) may be used in cooperation with the credential card reader 225 to provide a trusted channel 430 between the credential reader 225 and/or card 230, over the bus 277 (Figure 2), and the protected partition 410 once the protected partition has been established. The SIM access module 423 and credential reader 225 may provide this trusted channel by, for example, using an encryption key provided by the credential card 230 to encrypt information exchanged between the access module 423 and the SIM reader 225 and/or credential card 230 as described in more detail in co-pending U.S. Patent Application Number 10/715,970 published as US 2005-0108532 A1 entitled, "Method and System To Provide A Trusted Channel Within A Computer System For A SIM Device". Other approaches for providing a trusted channel, including, for example, per packet encryption, Message Authentication Code (MAC), Transport Layer Security and/or mutual authentication are within the scope of various embodiments.

To implement the trusted channel 330 using encryption, for example, the credential card access module 423 provides APIs 427 (which may be considered to be part of the access module 423 for some embodiments) for credential module services to trusted as well as legacy and/or untrusted applications. The credential reader 225 includes the necessary compute capabilities (cryptographic engine, memory and registers) to execute a trusted channel with the access module 423.

WWAN or other authentication software 419 may also be provided and may be run as a trusted application in the protected partition 410. The WWAN authentication software 419 may be used to establish and provide a trusted channel 435 having one endpoint in the WWAN authentication software 419 and the other endpoint within the WWAN module 270 (either hardware or firmware). The trusted channel 335 may be implemented using for example, per packet encryption, Message Authentication Code (MAC), Transport Layer Security and/or mutual authentication. Other approaches for providing for protected communications are within the scope of various embodiments. It will be appreciated that, for some embodiments, additional and/or alternative trusted channels between other modules may also be provided.

With continuing reference to Figures 2 and 4, once the trusted path 430 has been established, the trusted channel bit 245 may be set by the credential reader 225.

Using information stored in the credential card presence data store 240 and the trusted channel data store 245, for one embodiment, the credential card access control logic 235 may implement a credential card reader protection policy to address the different types of accesses to the credential card 230 described above.

Table 1 below describes an example of a protection policy of one embodiment that may be implemented by the credential card access control logic 235. In the example of Table 1, for purposes of illustration, it is assumed that the credential card 230 is one of a SIM module or a Smart Card (SC). It will be appreciated, however, that for other embodiments, a similar protection policy may be implemented for one or more different types of credential cards and/or a different policy may be implemented for similar cards.

**TABLE 1:**

| | Trusted Application | | | | Untrusted Application | | | |
|---|---|---|---|---|---|---|---|---|
| SIM access through Trusted Channel | **OK** | SIM/TC | 1 | 0 | **OK** | SIM/TC | 1 | 0 |
| | | 1 | OK | NA | | 1 | OK | NA |
| | | 0 | NA | NA | | 0 | NA | NA |
| SIM access without Channel Trusted | **Block** | SIM/TC | 1 | 0 | **Block** | SIM/TC | 1 | 0 |
| | | 1 | NA | B | | 1 | B | B |
| | | 0 | NA | NA | | 0 | NA | NA |
| SC access through Trusted Channel | **OK** | SIM/TC | 1 | 0 | **OK** | SIM/TC | 1 | 0 |
| | | 1 | NA | NA | | 1 | NA | NA |
| | | 0 | OK | NA | | 0 | OK | NA |
| SC access without Trusted Channel | **OK** | SIM/TC | 1 | 0 | **OK** | SIM/TC | 1 | 0 |
| | | 1 | NA | NA | | 1 | NA | NA |
| | | 0 | NA | OK | | 0 | NA | OK |

Referring to Figures 2, 4, and Table 1, in operation, as shown in Table 1, if the card 230 is determined to be a SIM card and a trusted channel has been established (indicated by a "1" in the SIM column and a "1" in the trusted channel row), an access to the card 230 through the trusted channel by either a trusted or untrusted application is allowed. For some embodiments, the reader 225 may be able to check a received packet to determine if it is part of the trusted channel 430 or if it was sent outside of the trusted channel by, for example, determining whether it presents the correct packet authentication. If the received packet arrived outside of the trusted channel, then the reader may simply discard it considering it to be an unauthorized access.

The ability to distinguish between a trusted and an untrusted application may not be supported by all embodiments. For embodiments for which such a distinction is supported, the indication of whether a trusted or untrusted application is attempting the access may be provided based on an authentication mechanism between an application attempting to access the SIM 230, such as an application running in the protected partition 410, and the SIM Access Module 423. For such embodiments, the SIM Access Module 423 may only allow successfully authenticated applications to access the SIM 230 through the trusted channel 430. Further, through this authentication mechanism, the SIM Access Module may be able to determine whether the application is a trusted application that may be granted full access to SIM services, or is an untrusted application that may only be granted limited access to SIM services.

With continuing reference to Table 1, if the card 230 is a SIM card and a trusted channel to the reader 225 has not been established, then accesses to the SIM card 230 by either a trusted or untrusted application are blocked as shown in the second row of Table 1.

If the card 230 is instead determined to be a Smart Card as indicated by a "0" in the card detection bit for this embodiment, then accesses by a trusted or untrusted application either through a trusted channel or where a trusted channel has not been established are allowed to proceed.

It will be appreciated that additional bits, opposite bit values and/or other information may be used by the reader 230 or another module (either software or hardware) to implement a security policy for credential card accesses in accordance with various embodiments. For example, for some embodiments a similar or different protection policy may be implemented in whole or in part by credential card software 265. For such embodiments, communication with the credential card may take place using input/output (I/O) ports or memory mapped space (not shown). These I/O ports or memory mapped address space may be protected such that only a single software entity may send communications to the card reader through those I/O ports or memory address. For embodiments that implement the LT architecture, LT's I/O port and memory page control security may further enhance such control.

Using the approaches of various embodiments for detecting a credential card type and implementing a protection policy based on the detected card type, it may be possible to prevent some types of attacks that may compromise the security of credential card secret information.

Thus, various embodiments of an approach for detecting a SIM card in a Smart Card reader and for protecting a SIM and/or Smart Card from unauthorized software accesses are described. In the foregoing specification, the invention has been described with reference to specific exemplary embodiments thereof. It will, however, be appreciated that various modifications and changes may be made. For example, for some embodiments, where the credential card reader is capable of receiving more than two types of cards, multiple commands may be provided to the credential card to determine the type of card in the reader. The specification and drawings are, accordingly, to be regarded in an illustrative rather than a restrictive sense.

## Claims

1. A method comprising:
receiving an indication that a credential card has been received at a credential reader;
providing an instruction to be received by the credential card, the instruction being recognizable by a first type of credential card and unrecognizable by a second type of credential card;
receiving a response to the instruction; and
determining that the credential card is the first type of credential card if the response indicates that the instruction was recognized by the credential card.

2. The method of claim 1 further comprising:
determining that the credential card is a second type of card if the response indicates that the instruction was not recognized by the credential card.

3. The method of claim 2 wherein
determining that the credential card is the second type of credential card includes determining that the credential card is a Smart Card.

4. The method of claim 1 wherein
determining that the credential card is a first type of credential card includes determining that the credential card is a type of Subscriber Identity Module (SIM).

5. The method of claim 4 wherein providing an instruction includes providing one of a RUN GSM METHOD and a GET SIM STATUS command.

6. The method of claim 5 further comprising determining that the card is a Smart Card if the response indicates that the command is unrecognizable by the card.

7. The method of claim 5 further comprising storing an indication of the type of card.

8. The method of claim 4 further comprising:
in response to determining that the credential card is a SIM card, initiating establishment of a trusted path to the credential reader.

9. The method of claim 8 further comprising:
storing an indication that a trusted path has been established in response to establishing the trusted path.

10. A method comprising:
determining a type of credential card received at a credential reader; and
implementing a credential card access policy based on the type of credential card determined to be received at the reader.

11. The method of claim 10 wherein
determining the type of credential card received at the credential reader includes
sending a command to the credential card that is recognizable by a first type of credential card and unrecognizable by a second type of credential card; and
determining that the credential card is the first type of card if a response received from the card indicates that the command is recognizable by the credential card.

12. The method of claim 11 wherein determining that the credential card is the first type of card includes determining that the credential card is a Subscriber Identity Module.

13. The method of claim 12 further comprising determining that the credential card is a Smart Card if the response received from the card indicates that the command is unrecognizable by the credential card.

14. The method of claim 10 further comprising
storing an indication of the credential card type in response to determining the type of credential card.

15. The method of claim 14 wherein
determining the type of credential card includes determining whether the credential card is a type of SIM card or a Smart Card.

16. The method of claim 15 further comprising,
if the credential card is a SIM card, participating in establishing a trusted channel having an endpoint in one of the SIM card and a SIM reader coupled to the SIM card.

17. The method of claim 16 further comprising,
indicating that a trusted channel has been established.

18. The method of claim 17 further comprising:
controlling access to the credential card based on the indication of the credential card type and the indication of whether the trusted channel has been established.

19. The method of claim 17 further comprising:
if the credential card is a SIM card, preventing accesses to the SIM card outside of the trusted channel.

20. A system comprising:
a bus to communicate information;
a processor coupled to the bus to execute instructions;
a battery adapter coupled to the bus, the battery adapter to receive a battery to provide a power source for the system;
a credential card reader coupled to the bus to receive a credential card; and
credential card access control logic to control access to the credential card based, at least in part, on whether the credential card is a first type of credential card or a second type of credential card.

21. The system of claim 20 wherein the first type of credential card is a Subscriber Identity Module (SIM) and the second type of credential card is a Smart Card.

22. The system of claim 21 further comprising:
card type detection logic coupled to the credential card reader to determine whether the credential card is a SIM or a Smart Card.

23. The system of claim 22 wherein the card detection logic is to determine whether the credential card is a SIM or a Smart Card based on a response from the credential card responsive to command that is recognizable by a SIM, but not by a Smart Card.

24. The system of claim 20 further comprising credential card type detection logic coupled to the credential card reader, the credential card type detection logic to determine a type of credential card coupled to the reader.

25. The system of claim 24 further comprising at least a first data store to store an indication of the credential card type.

26. The system of claim 25 further comprising at least a second data store to indicate whether a trusted channel has been established, the trusted channel to have one endpoint at the credential card reader.

27. The system of claim 26 wherein, if the credential card is the first type of credential card, the access control logic is further responsive to whether the trusted channel has been established to control accesses to the SIM.

28. A machine-accessible medium storing computer program instructions to program a programmable processing apparatus to become operable to perform a method as set out in at least one of claims 1 to 19.

29. A signal carrying computer program instructions to program a programmable processing apparatus to become operable to perform a method as set out in at least one of claims 1 to 19.
